# EUROPEAN PATENT SPECIFICATION

(11) **EP 2 107 709 B1**
(45) Date of publication and mention of the grant of the patent: **04.06.2014**
(21) Application number: 09004274.8
(22) Date of filing: 25.03.2009
(51) Int. Cl.: H04L 1/18, H04W 28/06

(54) **Method and apparatus of transmission time interval bundling management**
Verfahren und Vorrichtung zur Verwaltung der Bündelung von Übertragungszeitintervallen
Procédé et appareil de gestion de regroupement d'intervalle de durée de transmission

(30) Priority: 01.04.2008 US 41250 P
(43) Date of publication of application: 07.10.2009
(73) Proprietor: Innovative Sonic Limited, Port Louis (MU)
(72) Inventor: Tseng, Li-Chih, Taipei City Taiwan (TW)
(74) Representative: Görz, Ingo

(56) References cited:
- EP-A1- 2 015 500
- EP-A1- 2 015 601
- EP-A2- 1 594 246
- 3GPP DRAFT; R2-060944, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20060323, 23 March 2006 (2006-03-23), XP050131028 [retrieved on 2006-03-23]
- SIEMENS AG: "Packet Schemes for HSDPA" 3GPP DRAFT; R1-01-0838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Turin, Italy; 20010824, 24 August 2001 (2001-08-24), XP050095121 [retrieved on 2001-08-24]
- ERICSSON: "Evaluation of TTI-Bundling Alternatives", 3GPP DRAFT; R2-081465 EVALUATION OF TTI-BUNDLING ALTERNATIVES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139209, [retrieved on 2008-03-25]
- "UL coverage enhancement for VoIP transmission", 3GPP DRAFT; R2-081768, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080324, 24 March 2008 (2008-03-24), XP050139474, [retrieved on 2008-03-24]
- RAN1: "Reply LS on Uplink Coverage for LTE", 3GPP DRAFT; R1-081103, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080215, 15 February 2008 (2008-02-15), XP050109550, [retrieved on 2008-02-15]

## Description

The present invention relates to a method and apparatus of transmission time interval bundling transmission management in a wireless communication system according to the pre-characterizing clauses of claims 1 and 7.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

In LTE, a technique of transmission time interval (TTI) bundling is introduced for improving uplink coverage according to the prior art. TTI bundling is performed by repeatedly transmitting a same packet with default times, and those repeatedly transmitted packets are named a bundle. UEs in cell boundary utilizing TTI bundling can reduce transmission delay and signaling of control channels for enhancing reliability and accuracy of transmission, to improve LTE uplink coverage.

Targeting on TTI bundling technique, the prior art has not addressed related transmission patterns, which may cause transmission delay and waste of wireless resources.

EP 1 594 246 A2 discloses to retransmit at least one HARQ process of a previous TTI through the same HARQ process of a changed TTI.

### R2-060944 discloses an overview about variable TTIs.

EP 2 015 500 A1 that the chance for successfully retransmitting PDUs in constant sized TTIs decreases in case of a decreasing channel quality.

EP 2 015 601 A1 discloses to determine the channel quality in the communication environment in case of transmission errors and to amend the TTI-length based on this measurement to increase the Probability for a successful retransmission of a PDU.

R1-010838 discloses only a definition for a variable TTI-length.

This in mind, the present invention aims at providing a method and apparatus of transmission time interval bundling transmission management in a wireless communication system.

This is achieved by a method and apparatus for managing transmission time interval bundling transmission in a user equipment of a wireless communication system according to the pre-characterizing clauses of claims 1 and 7. The dependent claims pertain to corresponding further developments and improvements.

As will be seen more clearly from the detailed description following below, the present invention discloses a method for managing transmission time interval bundling transmission in a user equipment of a wireless communication system, which comprises forming a plurality of packets to be transmitted, and selecting a fixed time interval or a dynamic time interval for repeatedly transmitting each packet of the plurality of packets to a network end of the wireless communication system.

In the following, the invention is further illustrated by way of example, taking reference to the accompanying drawings. Thereof
FIG.1 is a schematic diagram of a wireless communication system.
FIG.2 is a functional block diagram of a wireless communication device.
FIG.3 is a schematic diagram of the program shown in FIG.2.
FIG.4 is a flow chart of a process according to an embodiment of the present invention.
FIG.5 is a schematic diagram of performing transmission time interval bundling with a fixed time interval according to an embodiment of the present invention.
FIG.6 is a schematic diagram of performing transmission time interval bundling with a dynamic time interval according to an embodiment of the present invention.

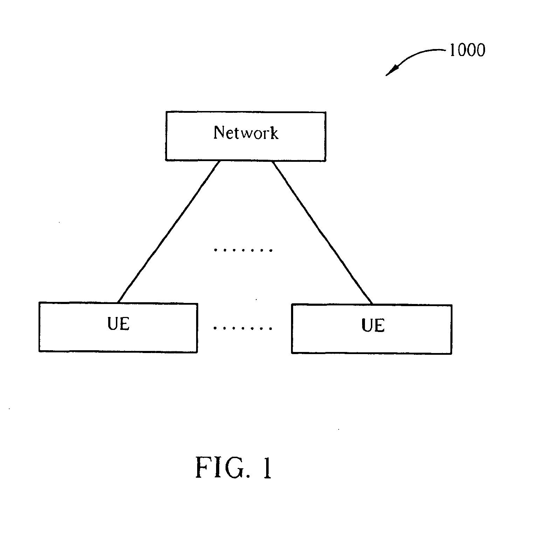

Please refer to FIG.1, which is a schematic diagram of a wireless communications system 1000. The wireless communications system 1000 is preferred to be a Long Term Evolution (LTE) communications system, and is briefly formed with a network terminal and a plurality of user equipments. In FIG.1, the network terminal and the user equipments are simply utilized for illustrating the structure of the wireless communications system 1000. Practically, the network terminal may include a plurality of evolved base stations (eNBs), an evolved UMTS radio access network (EUTRAN) and so on according to actual demands, and the user equipments (UEs) can be apparatuses such as mobile phones, computer systems, etc.

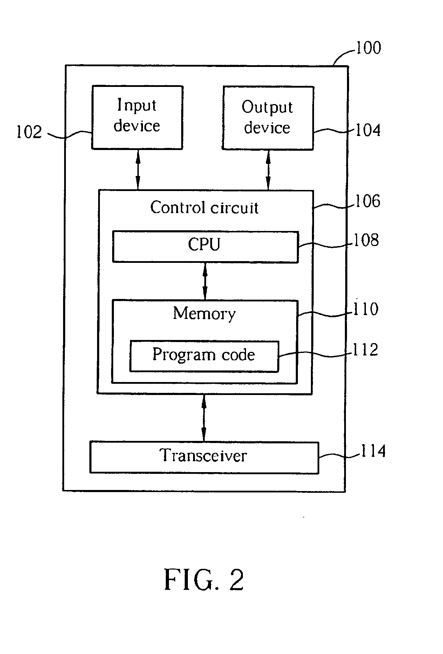

Please refer to FIG.2, which is a functional block diagram of a communications device 100. The communications device 100 can be utilized for realizing the UEs in FIG.2. For the sake of brevity, FIG.2 only shows an input device 102, an output device 104, a control circuit 106, a central processing unit (CPU) 108, a memory 110, a program 112, and a transceiver 114 of the communications device 100. In the communications device 100, the control circuit 106 executes the program 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

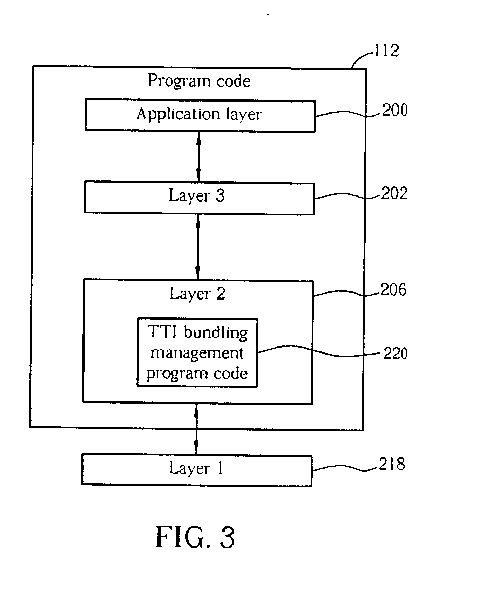

Please continue to refer to FIG.3. FIG.3 is a schematic diagram of the program 112 shown in FIG.3. The program 112 includes an application layer 200, a Layer 3 202, and a Layer 2 206, and is coupled to a Layer 1 218. The Layer 3 202 performs radio resource control. The Layer 2 206 comprises an RLC layer and a MAC layer, and performs link control. The Layer 1 218 performs physical connections.

In LTE, the MAC layer of the Layer 2 206 can perform a transmission time interval (TTI) bundling function for enhancing reliability and accuracy of transmission, to improve uplink coverage. Under such circumstances, when TTI bundling is configured by UE, the embodiment of the present invention provides a TTI bundling management program code 220 to manage TTI bundling transmissions.

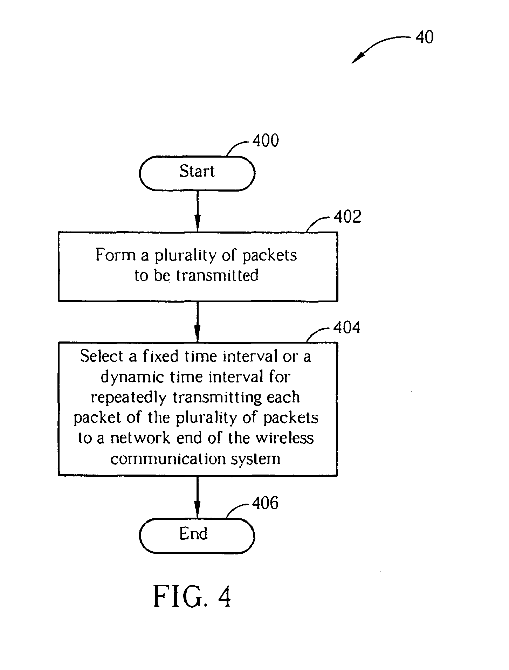

Please refer to FIG. 4, which is a flow chart of a process 40 according to an embodiment of the present invention. The process 40 is used for managing TTI bundling transmissions for a UE of the wireless communication system 1000, and can be compiled into the TTI bundling management program code 220. The process 40 includes the following steps:
Step 400: Start.
Step 402: Form a plurality of packets to be transmitted.
Step 404: Select a fixed time interval or a dynamic time interval for repeatedly transmitting each packet of the plurality of packets to a network end of the wireless communication system.
Step 406: End.

According to the process 40, when performing TTI bundling transmission, the embodiment of the present invention selects the fixed time interval or the dynamic time interval for repeatedly transmitting each packet. In short, in the embodiment of the present invention, the UE repeatedly transmits each packet with the fixed time interval or the dynamic time interval.

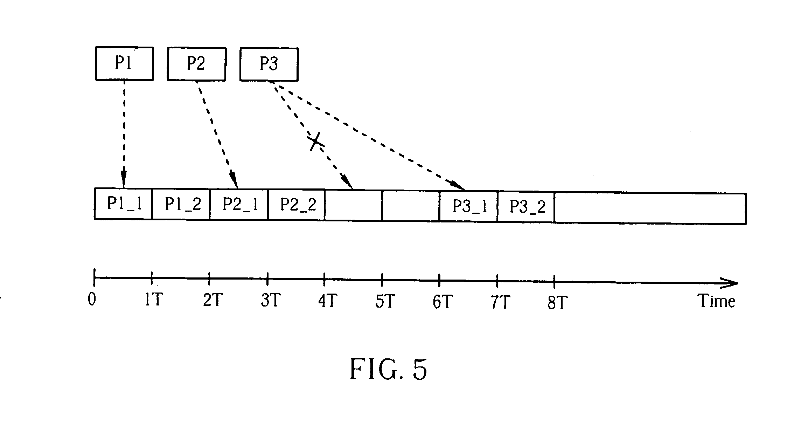

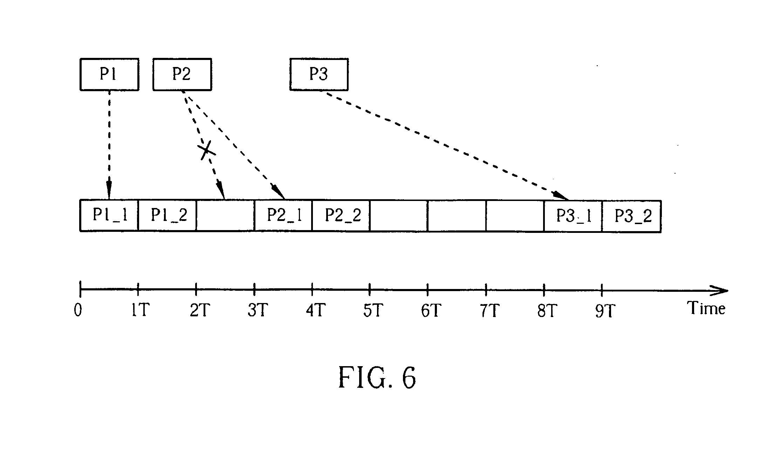

In detail, targeting on one of the packets, the UE forms a plurality of sub-packets corresponding to the packet. Each of the sub-packets can be the same as the packet, or slightly different from the packet because of operations like coding, while the essence of the sub-packets are the same as the packet after decoded. Next, targeting on all the packets, the UE can select the fixed time interval or the dynamic time interval to repeatedly transmit each packet, namely to transmit sub-packets of all the packets to the network end. Fig.5 and Fig.6 are schematic diagrams illustrating operation of TTI bundling with the fixed time interval and the dynamic time interval respectively.

In Fig.5, suppose that time interval is T, packets to transmitted are P1, P2 and P3, and each bundle is composed of two packets, meaning that each packet is transmitted twice. First, the UE transforms packets P1, P2 and P3 into sub-packets P1_1, P1_2, P2_1, P2_2, P3_1 and P3_2 in order, and each sub-packet can be the same as or slightly different from a corresponding packet. Next, the UE transmits each sub-packet continuously, that is, after the UE transmits the sub-packets P1_1 and P1_2 at a time point 2T, the UE continues to transmit the sub-packets P2_1 and P2_2. In other words, in Fig.5, the UE always transmits a bundle in each of two time intervals (0T∼2T, 2T∼4T, etc.), which means that the fixed time interval is corresponding to transmission times of each packet. In such a situation, if transmission delay or packet lost occurs, and causes the UE incapable of repeatedly transmitting packets, the UE waits for next fixed time interval, to transmit a packet. For example, between time points 4T and 5T, the UE cannot transmit the subpakets P3_1 and P3_2, and the UE waits for the next fixed time interval, which is between time points 6T and 7T, to transmit the packet P3 repeatedly.

In comparison, as shown in Fig.6, the UE repeatedly transmits the packets P1, P2 and P3, namely the sub-packets P1_1, P1_2, P2_1, P2_2, P3_1 and P3_2, with the dynamic time interval. Therefore, when the UE fails to transmits the sub-packets P2_1 and P2_2 corresponding to the packet P2 between time points 2T and 3T, the UE can immediately transmit the sub-packets P2_1 and P2_2 at next time interval (3T∼4T). Similarly, if the packet P3 is not generated just following the packet P2 but with a period between them, then after the packet P3 is formed, the UE can transmit the sub-packets P3_1 and P3_2 immediately.

Note that, Fig.5 and Fig.6 illustrate difference between operations of the fixed time interval and the dynamic time interval when two-time transmission is configured. In fact, the time of repeat transmission is not limited to be 2, and can be other values.

Besides, in the present invention, the fixed time interval can be taken as a special case of the dynamic time interval, and those skilled in the art can make modifications and alterations according to different requirements.

## Claims

1. A method for managing transmission time interval bundling transmission in a user equipment of a wireless communication system (1000), the method comprising:
forming a plurality of packets to be transmitted (402); and
**characterized by** selecting a fixed time interval or a dynamic time interval for repeatedly transmitting each packet of the plurality of packets to a network end of the wireless communication system (404).

2. The method of claim 1, **characterized in that** the fixed time interval is corresponding to times of repeating transmitting each packet of the plurality of packets.

3. The method of claim 1, **characterized in that** repeatedly transmitting each packet of the plurality of packets to the network end of the wireless communication system (404) comprises:
forming a plurality of sub-packets corresponding to each packet of the plurality of packets; and
transmitting the plurality of sub-packets corresponding to each packet to the network end.

4. The method of claim 3, **characterized in that** the plurality of sub-packets corresponding to each packet are the same.

5. The method of claim 3, **characterized in that** the plurality of sub-packets corresponding to each packet are different.

6. The method of claim 1, **characterized in that** the wireless communication system (1000) is a Long-Term Evolution communication system.

7. A communications device (100) for managing transmission time interval bundling transmission in a user equipment of a wireless communication system (1000), the communications device (100) comprising:
a processor (108) for executing a process (40); and
a storage device (110), coupled to the processor (108), for storing a program (112) for executing the process (40), wherein the process (40) comprises: forming a plurality of packets to be transmitted (402); and
**characterized by** selecting a fixed time interval or a dynamic time interval for repeatedly transmitting each packet of the plurality of packets to a network end of the wireless communication system (404).

8. The communications device (100) of claim 7, **characterized in that** the fixed time interval is corresponding to times of repeating transmitting each packet of the plurality of packets.

9. The communications device (100) of claim 7, **characterized in that** repeatedly transmitting each packet of the plurality of packets to the network end of the wireless communication system (404) comprises:
forming a plurality of sub-packets corresponding to each packet of the plurality of packets; and
transmitting the plurality of sub-packets corresponding to each packet to the network end.

10. The communications device (100) of claim 9, **characterized in that** the plurality of sub-packets corresponding to each packet are the same.

11. The communications device (100) of claim 9, **characterized in that** the plurality of sub-packets corresponding to each packet are different.

12. The communications device (100) of claim 7, **characterized in that** the wireless communication system (1000) is a Long-Term Evolution communication system.

## Patentansprüche

1. Verfahren zum Handhaben einer Übertragungszeitintervallbündelungsübertragung in einem Anwenderendgerät eines Drahtloskommunikationssystems (1000), wobei das Verfahren die Schritte umfasst:
Bilden einer Vielzahl zu übertragender Pakete (402); und
**gekennzeichnet ist durch** Auswählen eines festen Zeitintervalls oder eines dynamischen Zeitintervalls zum wiederholten Übertragen eines jeden Paketes der Vielzahl Pakete an ein Netzwerk eines Drahtloskommunikationssystems (404).

2. Verfahren nach Anspruch 1, **dadurch gekennzeichnet, dass** das feste Zeitintervall Zeiten von Wiederholungen von Übertragungen jedes Paketes der Vielzahl Pakete entspricht.

3. Verfahren nach Anspruch 1, **dadurch gekennzeichnet, dass** das wiederholte Übertragen eines jeden Paketes der Vielzahl Pakete an das Netzwerk des Drahtloskommunikationssystems (404) umfasst:
Bilden einer Vielzahl Sub-Pakete, welche sich auf ein jeweiliges Paket der Vielzahl Pakete bezieht; und
Übertragen der Vielzahl Sub-Pakete, welche sich auf das jeweilige Paket bezieht, an das Netzwerk.

4. Verfahren nach Anspruch 3, **dadurch gekennzeichnet, dass** die Vielzahl Sub-Pakete, welche sich auf das jeweilige Paket bezieht, dieselbe ist.

5. Verfahren nach Anspruch 3, **dadurch gekennzeichnet, dass** die Vielzahl Sub-Pakete, welche sich auf das jeweilige Paket bezieht, unterschiedlich ist.

6. Verfahren nach Anspruch 1, **dadurch gekennzeichnet, dass** das Drahtloskommunikationssystem (1000) ein Langzeitentwicklungs- bzw. Long-Term Evolution-Kommunikationssystem ist.

7. Kommunikationsgerät (100) zum Handhaben einer
Übertragungszeitintervallbündelungsübertragung in einem Anwenderendgerät eines Drahtloskommunikationssystems (1000), wobei das Kommunikationsgerät (100) umfasst:
einen Prozessor (108) zum Ausführen eines Prozesses (40); und
ein Speichergerät (110), welches mit dem Prozessor (108) zum Speichern eines Programms (112) zum Ausführen des Prozesses (40) gekoppelt ist, wobei der Prozess (40) umfasst:
Bilden einer Vielzahl zu übertragender Pakete (402); und
**gekennzeichnet durch** Auswählen eines festen Zeitintervalls oder eines dynamischen Zeitintervalls zum wiederholten Übertragen eines jeden Paketes der Vielzahl Pakete an ein Netzwerk eines Drahtloskommunikationssystems (404).

8. Kommunikationsgerät (100) nach Anspruch 7, **dadurch gekennzeichnet, dass** das feste Zeitintervall Zeiten von Wiederholungen von Übertragungen jedes Paketes der Vielzahl Pakete entspricht.

9. Kommunikationsgerät (100) nach Anspruch 7, **dadurch gekennzeichnet, dass** das wiederholte Übertragen eines jeden Paketes der Vielzahl Pakete an das Netzwerk des Drahtloskommunikationssystems (404) umfasst:
Bilden einer Vielzahl Sub-Pakete, welche sich auf ein jeweiliges Paket der Vielzahl Pakete bezieht; und
Übertragen der Vielzahl Sub-Pakete, welche sich auf das jeweilige Paket bezieht, an das Netzwerk.

10. Kommunikationsgerät (100) nach Anspruch 9, **dadurch gekennzeichnet, dass** die Vielzahl Sub-Pakete, welche sich auf das jeweilige Paket bezieht, dieselbe ist.

11. Kommunikationsgerät (100) nach Anspruch 9, **dadurch gekennzeichnet, dass** die Vielzahl Sub-Pakete, welche sich auf das jeweilige Paket bezieht, unterschiedlich ist.

12. Kommunikationsgerät (100) nach Anspruch 7, **dadurch gekennzeichnet, dass** das Drahtloskommunikationssystem (1000) ein Langzeitentwicklungs- bzw. Long-Term Evolution"-Kommunikationssystem ist.

## Revendications

1. Procédé de gestion de transmission de groupement d'intervalle de temps de transmission dans un équipement utilisateur d'un système de communication sans fil (1000), le procédé comprenant :
la formation d'une pluralité de paquets à transmettre (402) ; et
**caractérisé par** la sélection d'un intervalle de temps fixe ou d'un intervalle de temps dynamique pour transmettre de manière répétée chaque paquet de la pluralité de paquets à une terminaison de réseau du système de communication sans fil (404).

2. Procédé selon la revendication 1, **caractérisé en ce que** l'intervalle de temps fixe est correspondant à un nombre de répétitions de la transmission de chaque paquet de la pluralité de paquets.

3. Procédé selon la revendication 1, **caractérisé en ce que** la transmission de manière répétée de chaque paquet de la pluralité de paquets à la terminaison de réseau du système de communication sans fil (404) comprend :
la formation d'une pluralité de sous-paquets correspondant à chaque paquet de la pluralité de paquets ; et
la transmission de la pluralité de sous-paquets correspondant à chaque paquet à la terminaison de réseau.

4. Procédé selon la revendication 3, **caractérisé en ce que** la pluralité de sous-paquets correspondant à chaque paquet sont les mêmes.

5. Procédé selon la revendication 3, **caractérisé en ce que** la pluralité de sous-paquets correspondant à chaque paquet sont différents.

6. Procédé selon la revendication 1, **caractérisé en ce que** le système de communication sans fil (1000) est un système de communication LTE (Long Term Evolution).

7. Dispositif de communication (100) pour la gestion de transmission de groupement d'intervalle de temps de transmission dans un équipement utilisateur d'un système de communication sans fil (1000), le dispositif de communication (100) comprenant :
un processeur (108) pour exécuter un procédé (40) ; et
un dispositif de stockage (110), couplé au processeur (108), pour stocker un programme (112) pour exécuter le procédé (40), dans lequel le procédé (40) comprend :
la formation d'une pluralité de paquets à transmettre (402) ; et
**caractérisé par** la sélection d'un intervalle de temps fixe ou d'un intervalle de temps dynamique pour transmettre de manière répétée chaque paquet de la pluralité de paquets à une terminaison de réseau du système de communication sans fil (404).

8. Dispositif de communication (100) selon la revendication 7, **caractérisé en ce que** l'intervalle de temps fixe est correspondant à un nombre de répétitions de la transmission de chaque paquet de la pluralité de paquets.

9. Dispositif de communication (100) selon la revendication 7, **caractérisé en ce que** la transmission de manière répétée de chaque paquet de la pluralité de paquets à la terminaison de réseau du système de communication sans fil (404) comprend :
la formation d'une pluralité de sous-paquets correspondant à chaque paquet de la pluralité de paquets ; et
la transmission de la pluralité de sous-paquets correspondant à chaque paquet à la terminaison de réseau.

10. Dispositif de communication (100) selon la revendication 9, **caractérisé en ce que** la pluralité de sous-paquets correspondant à chaque paquet sont les mêmes.

11. Dispositif de communication (100) selon la revendication 9, **caractérisé en ce que** la pluralité de sous-paquets correspondant à chaque paquet sont différents.

12. Dispositif de communication (100) selon la revendication 7, **caractérisé en ce que** le système de communication sans fil (1000) est un système de communication LTE (Long Term Evolution).
